# EUROPEAN PATENT APPLICATION

(11) **EP 1 837 505 A1**
(43) Date of publication of application: **26.09.2007**
(21) Application number: 04802562.1
(22) Date of filing: 29.12.2004
(51) Int. Cl.: F02B 55/08, F02B 55/02, F02B 55/14, F02B 23/00, F01P 3/12

(54) **ROTARY ENGINE**

(71) Applicant: Chou, Jungkuang, Taibei, Taiwan (CN)
(72) Inventor: Chou, Jungkuang, Taibei, Taiwan (CN)
(74) Representative: Chaillot, Geneviève
(86) International application number: PCT/CN2004/001550
(87) International publication number: WO 2006/069480

(57) **Abstract**

The invention discloses a rotary engine which consists of a turbine, more than one slide blocks and knightheads. Several non-reverse triangular bag-type recesses as pistons that can improve unit energy are arranged emitting helically on circumferential surface or both sides of said turbine. The slide block is formed crescent-shape for matching with said turbine. The angle formed between curved slide and reverse direction of turbine can be changed by means of regulating knightheads, so as to save space and improve friction force between the curved slide and the turbine. Airflow producing in firebox and cooling chamber can be collected by a drive chamber arranged on the end of the slide block and can be used for pushing pistons to turn the turbine.

## Description

### BACKGROUND OF THE INVENTION

### (a) Field of the Invention

The present invention is related to a power machine, and more particularly to a rotary engine of a steam turbine.

### (b) Description of the Prior Art:

Whereas aircrafts and sea vessels demand jet engines that are fast or provided with high horsepower, land vehicles usually operate on reciprocal piston engines. Those engines for land vehicles have their unique advantage that they are able to maintain normal torque at lower revolution per minute. Jet engines are known for their advantages of comparatively consistent air-fuel ratio, good combustion efficiency, small dimension, and great horsepower since they usually continuous combustion to built up high temperature; however, they share a disadvantage of poor torque at low rpm. It usually takes to maintain a proper clearance between piston and cylinder for a reciprocal engine to run; therefore, the engine must be contained to run at low temperature to prevent strain due to expansion when hot and shrinkage when cold. To maintain cooling control, it consumes approximately 60% of total mass of fuel and the effective utility ranges as low as approximately 30%. Furthermore, it is difficult for an intermittent engine inlet system to control the air-fuel ratio; lower combustion temperature could easily produce air pollution, greater amount of each ignition of the cylinder, higher noise level, violent vibration, mingled control, structure becomes relatively heavy and strong, and the bore of the cylinder being limited not to get greater than 150 cm due to knocking. As a result, multiple cylinders must be designed to provide great horsepower to a gasoline engine; however, the engine has poor acceleration performance and the possible increment of horsepower is limited for feeding the air-fuel mixture as the engine runs for one or two revolution. On the contrary, conventional power machines such as a motor, water wheel, or turbine operate on a summary method by having a force driving to generate revolution in the direction of moving along an external tangent line of a circular wheel. The basic conception of the present invention rests in the working principle of the conventional power machine.

The prevent invention is related to an improved structure of CN Patent No. 20041000175206, which was published under CN1517528A on August 4, 2004.

As taught in the citation for an operation condition of a reverse triangle cavity and an engine combustion chamber, an impetus is generated from direct impact between the cavity and the combustion chamber by force of explosion and the opposite torque that can be easily produced by two slopes in the inserted triangle cavity are mutually neutralized.

A slider disclosed in the citation consumes larger space due to its triangular shape for the consideration of the arrangement of curvature. However, realizing a mutual functioning curvature between an arc runway and a pulley alone simply does not justify the increased thickness of the slider.

### SUMMARY OF THE INVENTION

The primary purpose of the present invention is to provide a fuel steam turbine rotary engine that features high combustion temperature, high efficiency, less noise and vibration, smaller volume, greater horsepower, lighter weight, lower production cost, simpler construction, and lower failure.

Another purpose of the present invention is to provide a fuel steam turbine rotary engine that realizes energy-saving purpose while being applicable to various types of fuel and purposes.

Another purpose of the present invention yet is to provide a fuel steam turbine rotary engine that is capable of fully utilizing mechanical energy generated from explosion and combustion by having multiple non-inserted triangular and sack shaped of pistons arranged in spiral at identical pitch along the peripheral or on both sides of the steam turbine.

Another purpose of the present invention yet is to provide a fuel steam turbine rotary engine, wherein a slider is reduced in size and made in an eclipse shape and externally disposed with multiple arc runways at where in relation to supporting rods are located for space-saving purpose.

Another purpose of the present invention yet is to provide a fuel steam turbine rotary engine that reclaims and fills steam evaporated from cooling water into a power chamber to drive the steam turbine.

To achieve those purposes described above, a rotary engine of the present invention includes a circular steam turbine and multiple sliders statically coordinating with the peripheral of the stream turbine; a center of the is fixed to a motive output main shaft; and multiple non-inserted triangle and sack shaped pistons arranged in spiral at identical pitch along the peripheral or on both sides of the steam turbine to expand capacity for accumulation of air-fuel mixture. When the air-fuel mixture is exploded and combusting in those sack shaped pistons, the air stream injects to its back along a given direction as were a rocket has been launched for the force applied to become more collective in a given direction. Therefore, to maintain strong flame, the combustion chamber must be maintained in high-pressure condition and the exhaustion must be maintained at replacement of small amount.

Those non-inserted sack shaped pistons arranged in spiral permits collective air stream resulted from the explosion in a piston and delivered in correct direction for direct drive, the high pressure air stream injected is immediately absorbed by a subsequent piston; and the high pressure air stream is provided with volumetric space for expansion to naturally pay powerful impetus.

An air inlet is provided on an inner side of the slider. Both of the combustion chamber and the power chamber are made in a cavity of inverted triangle with each of their contour matching that of the sack shaped piston to function similarly to that a cylinder does. The contour of the slider is reduced into an eclipse shape and multiple arc runways are externally disposed to the slider in relation to where multiple support rods are provided to obtain a proper curvature for interaction with those support rods. By regulating the position of the support rod, the extent of an included angle defined between the slider and the reversing direction the steam turbine is revolving while size of friction force between the steam turbine and the slider indicates an inverse ratio with the extent of the included angle.

Both front clearances respectively of the air inlet and the combustion chamber are greater than the length of the opening of the sack shaped piston to prevent the piston from jumping to the air inlet chamber and the combustion chamber or getting wild from its external scope thus to avoid affecting torque at low rpm due to air leakage.

The formula given below describes a chemical reaction of combustion of gasoline-air mixture:

C₁₈H₁₈ + 12.5O₂ → 8CO₂ + 9H₂O

Under STP condition, i.e., the environment of one atmosphere and 0°C, each mole of both CO₂ and H₂O produce 22.4 ℓ of air.

According to the formula, the exhaust contains more steam than nitrogen dioxide. Though steam is a form of clean motive energy, it is a shame that the temperature of cooling water in a conventional engine is practically set at the verge of evaporation, and 30% of fuel are wasted that otherwise can be converted into drive power. A ceramic engine without cooling device has been successfully developed in USA, Japan, and Europe that is capable of saving energy up to 30%. But it is applicable only to diesel engine while the present invention is applicable to fuel with high flash point.

When applied with a fuel with low flash point, the present invention injects steam after cooling into the power chamber to drive the steam turbine to revolve by having the high pressure air generated from the combustion chamber to pass through air pressure path to apply on a metal floating board disposed in the radiator. Once the temperature rises over the preset point, a temperature controller gives a command to open up a solenoid, and the radiator is thus conducted through to allow water current to be atomized and injected into a cooling chamber where thermal energy is absorbed to generate steam to further enter into the power chamber for driving pistons to revolve the steam turbine. The solenoid shuts off when the temperature returns to its preset point.

Under normal pressure, ignition of thinner oil mist or air-fuel mixture usually will not create explosion since fuel particles stay far away from one another to prevent mutual ignition. According to the conventional engine, the air-fuel mixture is compressed through travel of the cylinder down to one ninth of volume, fuel particles are pushing closer to one another to such extent that permits mutual ignition and will create explosion once ignited. The combustion starts at a point, then a line, and finally the full scale. In case of air leakage due to normal tear and wear of the engine, resultant pressure drop to prevent fuel particles from getting closer to one another will cause incomplete combustion or interrupted combustion to further frustrate start-up of the engine. Consequently, earlier ignition for five time scales is needed to realize optimal function. In the combustion chamber of the present invention, it is always maintained a flame at high temperature and pressure to allow the air-fuel mixed at any compression ratio to be immediately combusted to generate motive force. In case of air-fuel mixture with low compression ratio, the high pressure flam air current in the combustion chamber will be immediate washed backed into the piston and the high pressure air stream after combustion will flow back into the combustion chamber to reach a balanced status. The bilateral exchange oscillation substitutes the compressed air-fuel mixture to provide full static combustion than that does in the conventional engine. According to chemical principles, the higher the air pressure is, the faster the reaction gets. Accordingly, the present invention is unique and progressive since it demands not much on the airtight of the engine, not vulnerable to stall or failure.

### BRIEF DESCRIPTION OF THE DRAWINGS

Fig. 1 is a perspective view of the present invention
Fig. 1a is a schematic view showing a support rod and a bracket to secure the support rod in the present invention.
Fig. 2 is an exploded view of a steam turbine and a slider in the present invention.
Fig. 3 is a sectional view showing that the steam turbine and the slider are incorporated to each other in the present invention.
Fig. 4 is a layout of the present invention.
Figs. 5, 6, and 7 are layouts showing operation travel of the present invention.
Fig. 8 is a sectional view of the present invention.
Fig. 9 is a schematic view showing a perspective view of the present invention in an operating configuration.

### DETAILED DESCRIPTION OF THE PREFERRED EMBODIMENTS

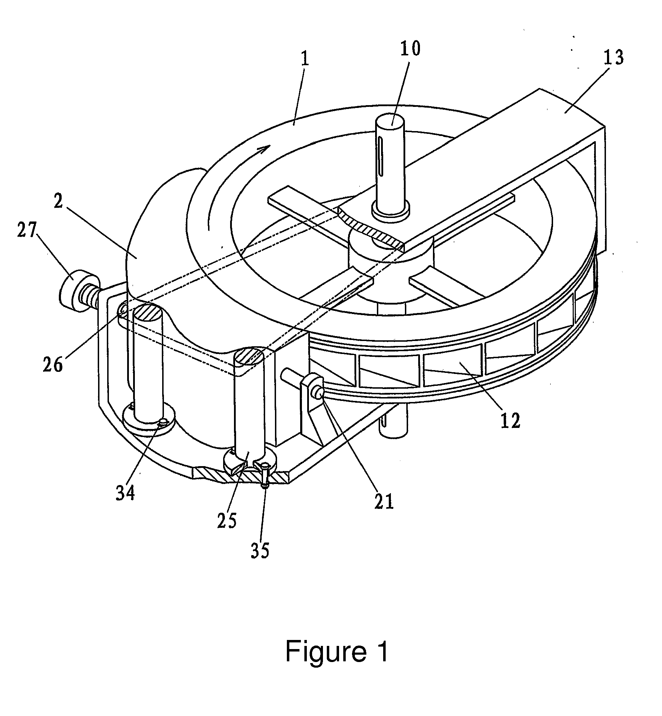

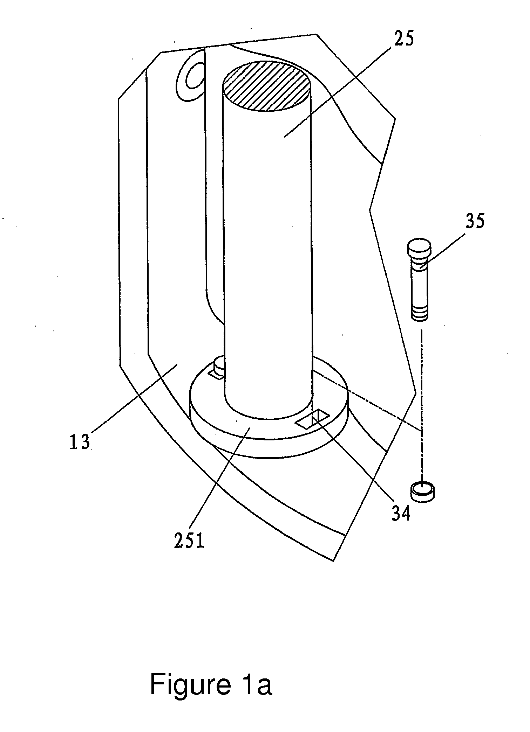

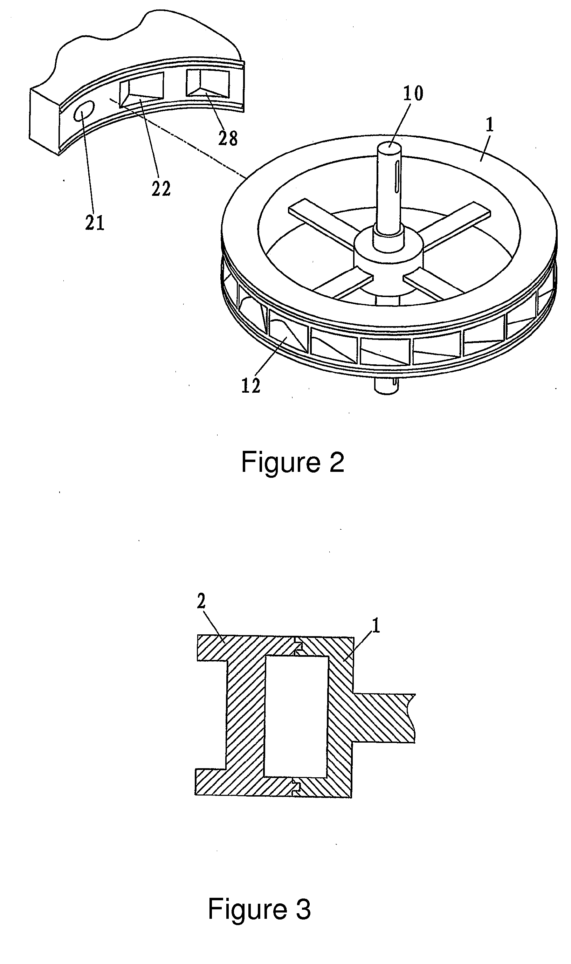

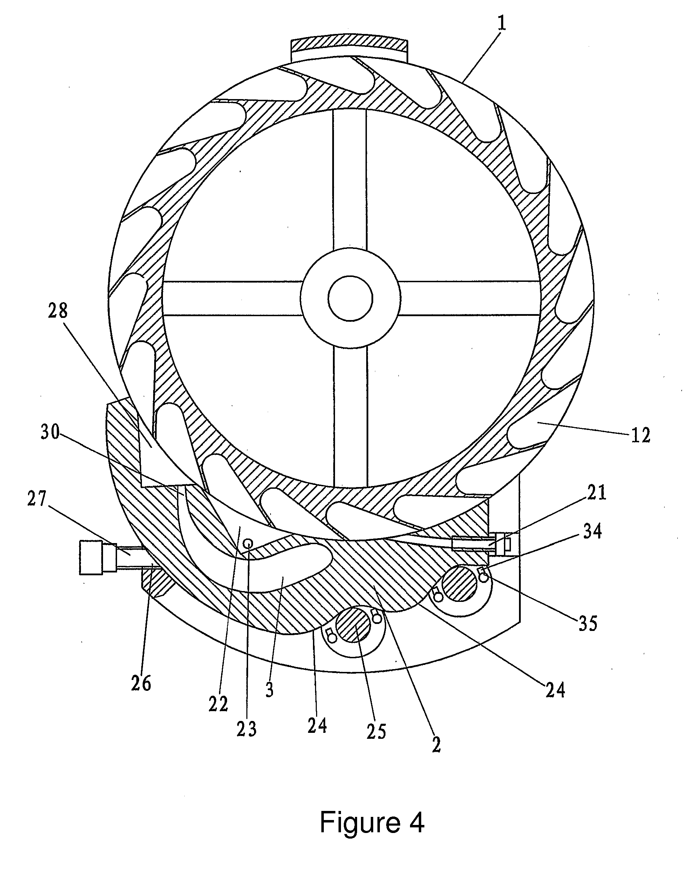

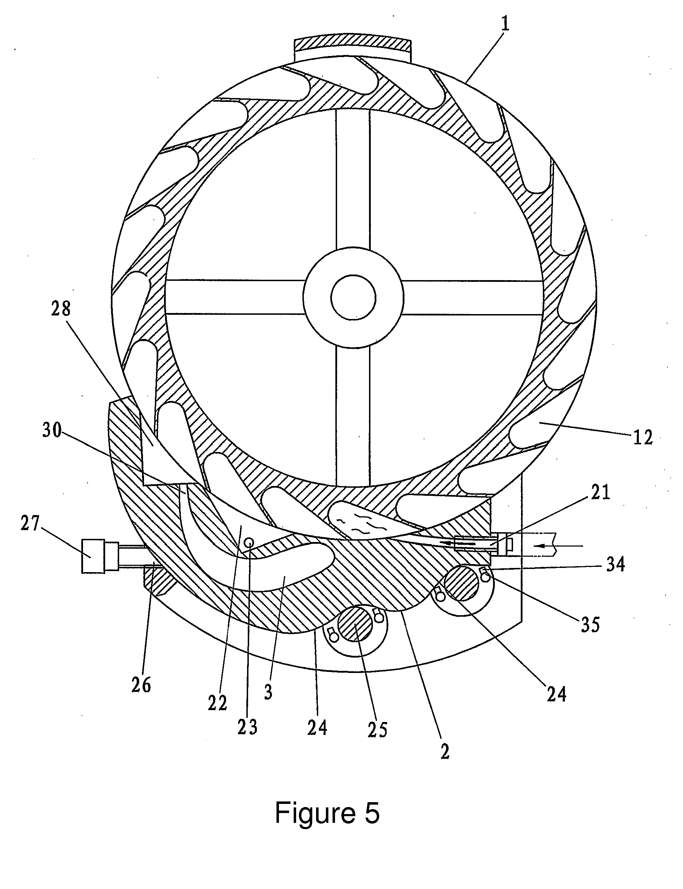

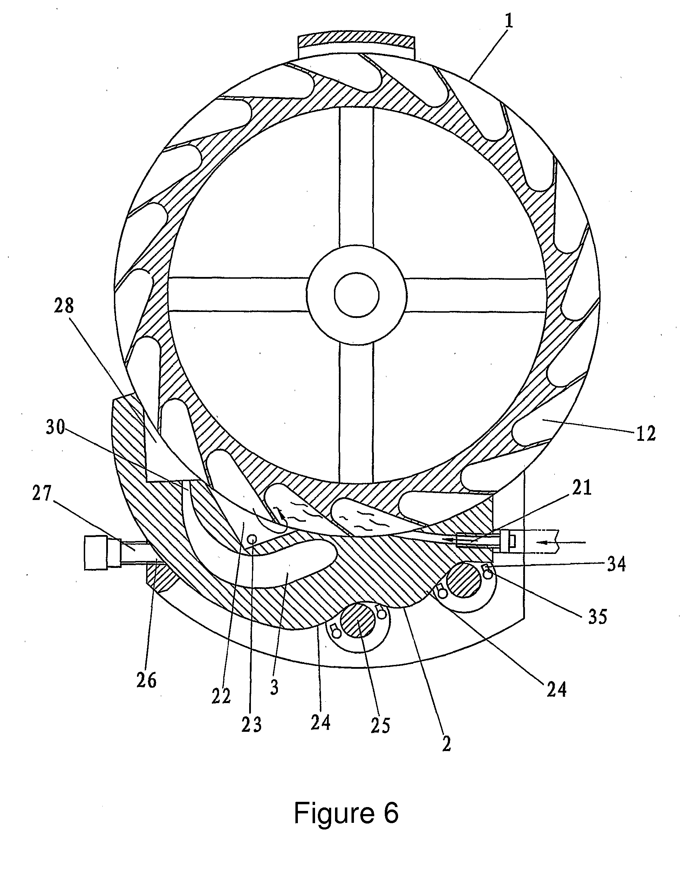

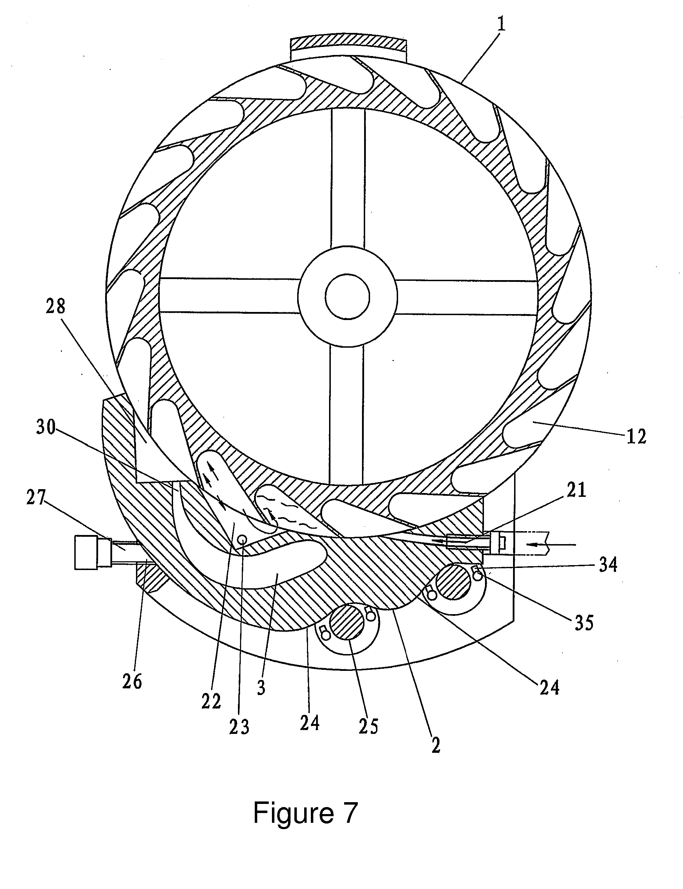

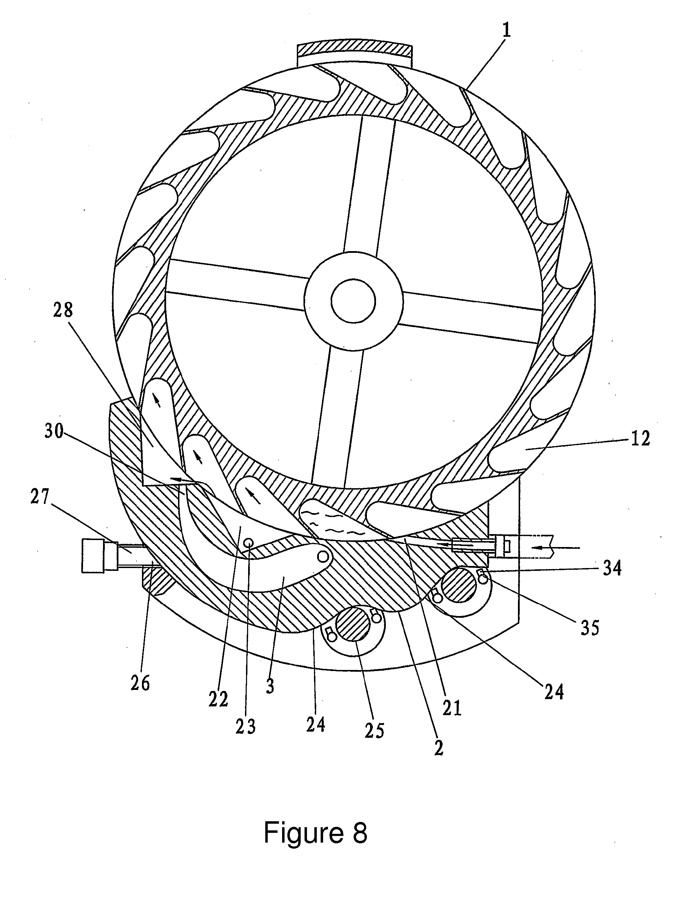

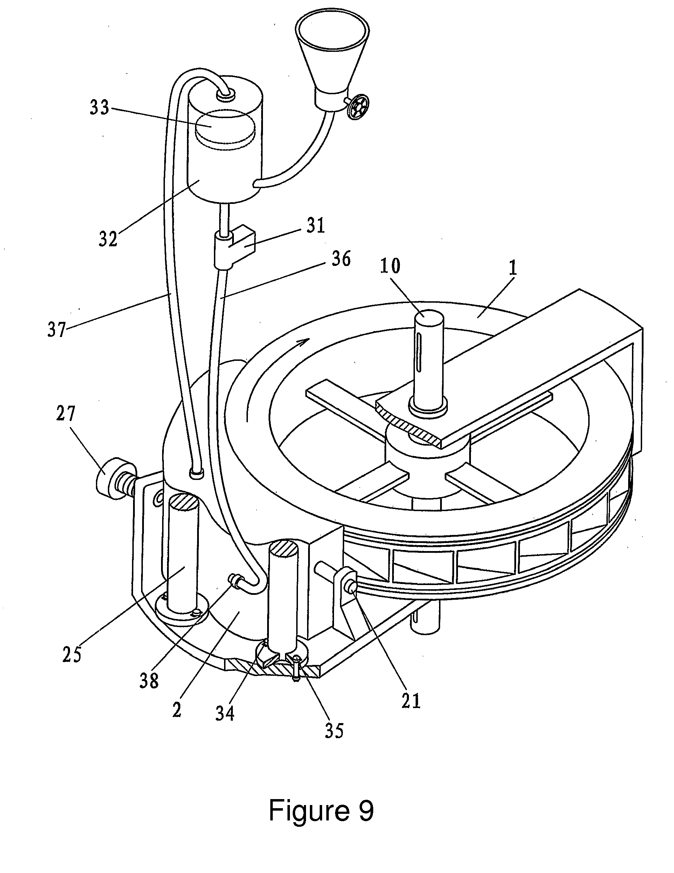

Referring to Figs. 1 through 9, a rotary engine of the present invention is essentially comprised of one or a plurality of slider 2 statically adapted to a circular steam turbine 1. Wherein, a center of the steam turbine is fixed to a main shaft 10; multiple non-inverted triangle pocket shaped pistons 12 arranged at equal pitch on the circumference or both sides of the steam turbine 1; and one or multiple slider 2 is statically kept close to those pistons 12.

Each slider 2 indicates an eclipse shape and provided on its inner side a cavity in a shape similar to an inverted triangle, and respectively contains a combustion chamber 22 and a power chamber 28; both of the combustion chamber 22 and the power chamber 28 have their respective openings matching that of the non-inverted triangle sack shaped pistons 12 provided on the steam turbine 1 so that when those pistons 12 meet both of the combustion chamber 22 and the power chamber 28 meet to constitute a construction similar to that of a cylinder; the slider contains a semi-closed cooling chamber 3 having one side connected through the power chamber 28, and an air inlet 21 is provided on an outer side of the slider 2 to penetrate into the slider 2. Multiple arc runways 24 are externally provided on the slider 2 to define an included angle with the steam turbine 1 in its reverse revolution direction and are secured to a bracket 13. The support rod 25 can be adjusted for its position secured in the bracket 13 by adjusting an screw 35 and a slit 34 disposed on each of both flange 251 of the support rod 25 so to sustain counterforce applied to those arc runways 24. An opening of the included angle is provided with a screw 27 and a coil 26 to regulate a small amount of pressure applied on the slider 2 to make sure of its close incorporation with the stream turbine while preventing the slider 2 from falling off the stream turbine revolving in positive direction.

A plug 23 is disposed in the combustion chamber to continue ignition for maintaining generation of motive force to deliver most direct transmission while complying with principles of vector dynamics. The most important characteristic of the present invention is its ability to cope with pressure variations and a phenomenon of expanding when hot and shrinking when cold for making breakthrough a blind point generally found in the trade wherein braking effects are created when the torque is affected by applying comparatively higher pressure on the slider 2.

In the present invention, multiple arc runways 24 supported by the support rod 25 define an included angle with the steam turbine 1 revolving in reverse direction. Friction between the arc runways 24 and the revolving stream turbine 1 increases as pressure between them increases due to thermal expansion. As a result, the slider 2 escapes from the included angle as driven by minute amount of the stream turbine 1 in its positive revolving direction, and is immediately pushed back to be located in the included angle once again due to counterforce to provide the optimal results.

If the spacing between the combustion chamber 22 and the power chamber is grater than the length of the opening of the sack shaped piston 12, the combustion chamber always maintain air of high pressure; and that is a condition making it impossible to generate impetus theoretically. However, the highly pressured and high temperature flam in the combustion chamber 22 causes impact upon the low pressure mixed air in the sack shaped piston to realize compression for producing special effects of fast reaction for the sack shaped piston 12 to deliver the high pressure air after the combustion into the power chamber 28 to generate impetus for driving the stream turbine 1. Theoretically, high-pressure air must be provided with a space of expandable capacity for it to generate impetus to drive.

In releasing the high-pressure air, the revolving speed of the engine gets faster when the volumetric expansion is faster, and higher torque can be realized. If the spacing between the combustion chamber 22 and the power chamber 28 is shorter than the length of the opening of the piston 12, the piston 12 may go across both of the chambers; accordingly, a drop takes place in the combustion chamber to trigger off another explosion and combustion for the high pressure air to fast impact the space so that both chambers are able to generate impetus and achieve a better balanced force of function. In either mode as the spacing between both chambers and the piston opening described above, the combustion chamber 22 always maintains in high-pressure status, and it is preferred in providing small amount adjustment to the exhaustion instrument, i.e., it is preferred that the spacing between the combustion chamber 22 and the power chamber is slightly smaller than the opening length of the piston 12.

The rotary engine of the present invention operating with high flash point fuels without the necessity of providing a cooling system saves approximately 30% of fuel consumption; however, if gasoline or any other fuel with low flash point is used, the operation becomes difficult for the rotary engine since the flash point for spontaneous combustion of gasoline is only at 300°C and a cooling system must be provided. To achieve the purpose, have the high-pressure air stream in the combustion chamber 22 to pass through a high-pressure pipeline 37 to apply pressure on a floating metal plate disposed in a radiator 32. When the temperature rises over a preset point, a temperature sensor (not illustrated) gives command to open a solenoid 31 for a water current to flow through a cooling water pipeline 36 to be injected into a cooling chamber 3 connected through the power chamber 22 by an atomization nozzle 38 for the water current to absorb heat to evaporate for the stream to directly enter into the power chamber 22 where to drive the sack shaped piston 12 and to revolve the stream turbine 1.

The rotary engine of the present invention must suck in the air from an external air compressor, and the fuel gas outputs high-pressure mixture after having been compressed and the high-pressure mixture is supplied to the engine through a pipeline. Alternatively, an air compressor matched by amount of energy is selected to directly incorporated with the engine on one-to-on basis; however, in this option, additional excitement motor must be provided. Whereas both of the combustions and revolution take place in high temperature, it is preferred to have both of the stream turbine 1 and the slider 2 coated with silicon carbide, zirconium oxide, diamond film, ceramic materials, and other materials that withstand high temperature and friction material. Catalyst conversion must be provided to expel resultant higher containments of NOx, SO₂, acute toxins generated from exhaustion at higher temperature. A cyclone containing circulation cup of atomized water may be connected in series to the rotary engine to help reduce exhaust temperature while collecting massive carbon dioxide is absorbed and converted into carbonic acid solution for discharge.

The rotary engine of the present invention is set for combustion at high temperature to skip reliance upon compression ratio to upgrade the temperature of the air-fuel mixture and without risking of stall due to air leakage or having strict consideration of air-fuel mixture concentration and spacing among fuel particles, and more air being admitted for complete combustion. The present invention not only corrects all flaws found with the conventional engines but also delivers a great number of advantages.

A feasibility analysis of dynamics is provided based on those described above. The excitement motor revolves to admit the air-fuel mixture to inject through the air inlet 21 into those sack shaped pistons 12 and then into the combustion chamber 22 to be directly subject to impact by the high-pressure flame from the combustion chamber 22 into those pistons 12 to ignite the air-fuel mixture. Massive high-pressure air stream generated from the combustion partially flows back into the combustion chamber 22 while the remaining air stream stays in those sack shaped pistons 12 for the pressures respectively in the combustion chamber 22, those pistons 12, and the air stream generated to reach a balanced status. The air stream is injected from those sack shaped pistons 12 directly into the power chamber 28 and those revolving sack shaped pistons 12 cause the space in the power chamber 28 to externally open to and close upon alternatively. Consequently, the high-pressure air stream closer to the exhaust is released and escapes in turns to strike against those pistons 12 in revolution. The air pressure in the power chamber 28 fluctuates and ach pressure drop indicates air expansion and thus a moment is generated. The air stream travels in one direction and is not reversible, and the air stream has to drive in the position direction. The analysis of the combustion chamber 22 shows that a vector revolves in positive direction along a circumferential orientation has to be greater than a vector that is approaching zero and passes through a center of a circle, and there must be the power present in the direction of revolution. Impetus generated from explosion of the air-fuel mixture in those sack shaped pistons 12 directly drive those pistons 12 to revolve for them to bring the high-pressure air into the power chamber 28 and to start expansion therein. The resultant moment directly drives those pistons 12 to revolve while the counterforce meets the static slider and return to become active force. Finally, though the air stream at the terminal of the exhaust outlet becomes comparatively lower, certain portion of the residual energy remains capable of producing motive force.

The prevent invention provides an improved structure of a light guide construction for direct type backlight module, and the application for a utility patent is duly filed accordingly. However, it is to be noted that the preferred embodiments disclosed in the specification and the accompanying drawings are not limiting the present invention; and that any construction, installation, or characteristics that is same or similar to that of the present invention should fall within the scope of the purposes and claims of the present invention.

## Claims

1. A rotary engine comprising a circular stream turbine and one or a plurality of slider statically coordinating with the steam turbine; multiple non-inverted triangle sack shaped pistons are arranged in radius spiral at a same pitch on a circumference or both sides of the steam turbine.

2. The rotary engine as claimed in Claim 1, wherein the slider indicates an eclipse shape; the slider is provided on its inner side a civility in shape similar to that of an inverted triangle; the slider contains respectively a combustion chamber and a power chamber; each opening of the combustion chamber and the power chamber matches that of an opening of the piston; those sack shaped pistons, the combustion chamber and the power chamber constitute a construction similar to that of a cylinder; the slider contains a semi-closed cooling chamber having its one side connected through the power chamber; and an air inlet is provided externally to the slider and penetrating into the slider.

3. The rotary engine as claimed in Claim 1, wherein multiple arc runways are disposed to an outer side of the slider, the slider is movably clamped at where between the stream turbine and the support rod, and defines an arc included angle with the steam turbine revolving in reserve direction.

4. The rotary engine as claimed in Claim 1, wherein the support rod is provided with a device to adjust its position to change its support points on those arc runways; and the size of an included angle is sufficient to affect friction force between the stream turbine and the slider; and the size of the pressure of the adjustment device is in inverse proportion with the extent of the included angle.

5. The rotary engine as claimed in Claim 2, wherein the cooling chamber is connected to the radiator through a cooling water pipeline, and the radiator is connected to the combustion chamber through an air pressure pipeline.

6. The rotary engine as claimed in Claim 5, wherein the radiator contains a floating plate and connected with a cooling water pipeline to a solenoid, and the of and off operation of the solenoid is commanded by a temperature sensor disposed in the cooling chamber.

7. The rotary engine as claimed in Claim 1, wherein a power chamber is disposed on the inner side of a terminal of the slider; the power chamber gathers steam and air stream and is intermittently released to drive those pistons to create moment for improving force to revolve those pistons.
